# DEMANDE DE BREVET EUROPEEN

(11) **EP 0 720 010 A1**
(43) Date de publication de la demande: **03.07.1996**
(21) Numéro de dépôt: 95402898.1
(22) Date de dépôt: 01.12.1995
(51) Int. Cl.: G01N 3/60, G01N 17/00

(54) **Dispositif d'essai d'un élément d'optique soumis à un rayonnement**

(30) Priorité: 26.12.1994 FR 9415640
(71) Demandeur: COMMISSARIAT A L'ENERGIE ATOMIQUE, F-75015 Paris Cédex 15 (FR); ETAT FRANCAIS Représenté par le délégué général pour l'armement, F-00460 Armées (FR)
(72) Inventeur: Duloisy, Erik, F-38170 Seyssinet-Pariset (FR); Dijon, Jean, F-38800 Champagnier (FR)
(74) Mandataire: Ilgart, Jean-Christophe

(57) **Abrégé**

Dispositif d'essai d'un élément (E) d'optique pour simuler l'échauffement par un faisceau lumineux fortement énergétique.

On utilise le contact d'une pointe (11) chauffée à une température bien définie pour simuler le rayonnement. Le couplage mécanique réalisé est bien préférable au couplage optique entre un rayonnement et l'élément (E) pour la qualité de l'essai.

## Description

L'invention est relative à un dispositif d'essai d'un élément d'optique qui est destiné à être soumis à un rayonnement.

Certains rayonnements, notamment ceux des lasers, ont une puissance susceptible de détruire par échauffement les éléments tels que des lentilles et des miroirs qu'ils traversent ou qu'ils atteignent, malgré la faiblesse de la portion de leur énergie qu'ils perdent dans ces éléments par le couplage optique.

Les dégâts peuvent être dus à l'échauffement lui-même qui altère la matière de l'élément et le fond, ou aux contraintes qu'il engendre dans l'élément entre les zones traversées par le rayonnement et les autres, plus froides, ou entre des couches de compositions différentes de l'élément, et qui se traduisent par l'apparition de fissures, de délaminations, de soufflures ou de défauts analogues.

Un procédé commode d'essai consiste à irradier l'élément par un faisceau analogue à celui auquel il devra résister en service. Ce procédé est éprouvé et convenable mais on peut lui reprocher un certain nombre d'inconvénients. Il est tout d'abord difficile de mesurer la sollicitation thermique réelle, car il n'est pas question de mesurer directement la température du faisceau ou la température de l'échantillon au point d'arrivée du faisceau en y plaçant un thermomètre, et il faut donc recourir à une mesure indirecte à l'aide de modèles physiques et mathématiques et du couplage optique du matériau. D'autres paramètres, tels que la puissance du faisceau, sont aussi difficiles à mesurer convenablement. Les bancs d'essai ainsi réalisés sont donc compliqués et coûteux.

Un autre problème, plus fondamental, est que l'absorption optique à l'origine de l'échauffement de l'élément varie souvent fortement en fonction de la température de l'élément et s'accroît normalement aux températures élevées. L'essai est alors instable, l'échauffement de l'échantillon étant de plus en plus rapide jusqu'à sa destruction éventuelle, ce qui a comme conséquence principale que le déroulement de l'endommagement ne peut pas être observé dans de bonnes conditions. Enfin, un grave inconvénient provient de ce que l'issue de l'essai dépend fortement des hétérogénéités et des impuretés de l'élément : en pratique, ces impuretés, qui absorbent beaucoup mieux l'énergie du rayonnement, sont portées à une température plus élevée que le reste de l'élément et favorisent sa destruction. On aimerait souvent s'affranchir de cette influence et se placer dans les conditions d'essai d'un élément de composition pure.

L'invention est relative à un dispositif d'essai différent, dans lequel l'effet du rayonnement est simulé par un couplage mécanique de l'élément avec une pièce jouant le rôle d'une source chaude qui lui communique sa chaleur par conduction, avec une bien meilleure efficacité. On peut mener ainsi des essais où la température de l'élément d'optique au point d'arrivée du faisceau est toujours connue avec précision, sans qu'un phénomène d'emballement de l'échauffement se produise, ce qui permet de maintenir constant l'essai et de l'étaler sur un temps aussi long qu'on le souhaite pour suivre l'évolution de la destruction. On peut aussi bien employer un élément chargé d'impuretés car la température imposée par la pièce chaude en contact est la même pour les impuretés, qui ne constituent donc plus de foyers chauds, que pour le reste de l'élément. Enfin, la mesure de cette température est très facile si on dispose par exemple un thermomètre dans la pointe.

Sous sa forme la plus générale, le dispositif d'essai comprend un support de fixation de l'élément d'optique à l'essai, une pointe conductrice thermique, reliée à une source de chaleur réglable et mobile au-dessus du support pour être posée sur l'élément d'optique.

L'invention va maintenant être décrite à titre illustratif et non limitatif à l'aide des figures suivantes :
- la figure 1 est une vue générale du dispositif d'essai,
- et les figures 2 et 3 représentent des pointes utilisées.

La machine d'essai, appelée indenteur thermique, comprend une plaque de support 1 sur laquelle sont disposés côte à côte un support 2 de l'échantillon E à étudier, qu'un thermostat 3 occupe, et une table inférieure 4. Cette table inférieure 4 forme avec une table supérieure 5 et une potence 6 successivement posées sur elle une table de déplacement en X-Y d'usage courant dans les machines d'usinage par exemple : la table supérieure 5 se déplace sur la table inférieure 4 perpendiculairement au support d'échantillon 2, et la potence 6 se déplace sur la table supérieure 5 parallèlement au support d'échantillon 2. Ces mouvements sont imposés par des ajustements en glissières à queue d'aronde. Des verniers 7 installés sur les tables 4 et 5 assurent ces mouvements avec la précision souhaitée. Un troisième vernier 7, situé au sommet de la potence 6, permet de déplacer un curseur 8 dans la direction Z perpendiculaire aux précédentes, c'est-à-dire vers la surface supérieure du support d'échantillon 2 et de l'échantillon E lui-même, ou dans un sens opposé. Le curseur 8 peut coulisser sur la potence 6 le long d'une autre glissière 9 en queue d'aronde.

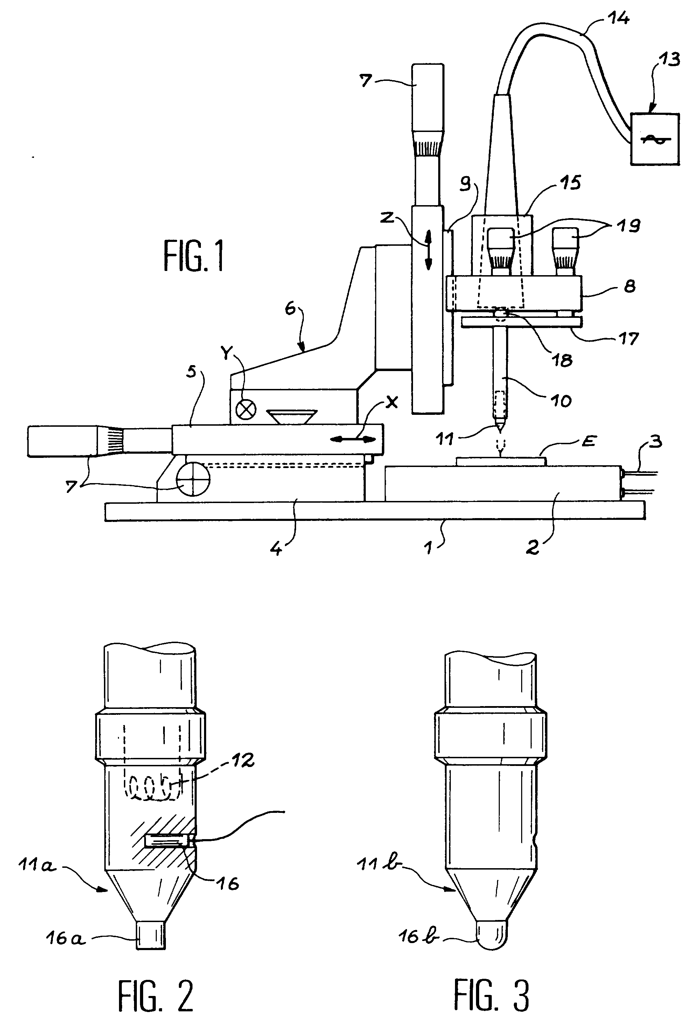

Le curseur 8 porte au-dessus de lui une tige 10 qui est dirigée vers le bas et se termine par une pointe 11 dont deux réalisations lla et llb sont illustrées aux figures 2 et 3. On se reporte à ces figures pour voir que la pointe 11 est chauffée par une résistance 12 qu'elle enrobe et qui est reliée au réseau électrique 13 par un câble 14 dont les fils s'étendent dans la tige 10. Dans une autre réalisation, la résistance 12 peut être bobinée autour de la tige 10 à proximité de la pointe 11. Un système de réglage 15, qui peut comprendre un transformateur et un rhéostat, est adjoint pour que la puissance dissipée par la résistance 12, et donc la température de la pointe 11, puissent être changées à volonté. Cette température est mesurée par un thermomètre 16 engagé dans une encoche de la pointe 11 et qui peut consister en une extrémité de thermocouple. Le thermomètre 16 doit simplement être assez petit pour ne pas compromettre l'écoulement de la chaleur par conduction en n'occupant qu'un faible volume dans la pointe 11. La pointe 11 est donc construite en matériau bon conducteur thermique et de préférence à faible dilatation. L'aluminium aux températures assez basses, puis le molybdène, sont à recommander à titre d'exemples.

La pointe 11 est terminée par un téton dont la forme permet de simuler la trace du rayonnement incident sur l'échantillon E et qui peut avoir une section circulaire, carrée ou autrement polygonale. De plus, la face touchant l'échantillon E peut être plate, comme on l'a représenté avec le téton 16a de la figure 2, ou arrondie comme on l'a représenté avec le téton 16b de la figure 3. Dans tous les cas, la surface de la pointe en contact avec l'échantillon doit être polie quelle que soit sa forme. De préférence, ce poli doit être de qualité optique. Le dépôt d'un revêtement inaltérable est à envisager sur cette face en contact pour protéger la pointe 11 de l'oxydation de l'air. De l'or peut ainsi être déposé par évaporation.

Surtout dans le premier cas, il peut être intéressant de régler également l'orientation en rotation également de la pointe 11. Dans un tel cas, la tige 10 n'est pas directement fixée au curseur 8 mais à une tablette 17 et qui lui est suspendue par exemple par une rotule 18 centrale. Deux verniers supplémentaires 19 liés au curseur 8 et à angle droit par rapport à la rotule 18 peuvent alors faire basculer la 17 et la tige 10 autour des axes X et Y respectivement.

Le vernier 7 déplaçant le curseur 8 verticalement peut comprendre un dispositif connu de déconnexion, qui interrompt la descente de la tige 10 dès que la pointe 11 presse l'élément optique E avec une certaine force, quelles que soient les commandes imposées au vernier 7. On prémunit ainsi l'élément optique E contre les dommages mécaniques ou du moins les contraintes excessives qui pourraient troubler l'essai.

L'essai consiste donc à poser la pointe 11 sur l'élément optique E après avoir réglé la puissance délivrée par la résistance 12 et la température du support 2 par le débit et la température du liquide qui parcourt le thermostat 3. Le contact est maintenu pendant la durée souhaitée, après quoi la tige 10 est retirée et l'élément optique E est retiré et examiné.

Des essais comparatifs avec cette machine indenteuse et des essais classiques au laser ont été menés sur un certain nombre d'échantillons. Ils ont révélé une excellente convergence des résultats en ce qui concerne l'allure des dommages et la température de destruction, bien que dans ce dernier cas des différences soient concevables à cause des impuretés, comme on l'a expliqué plus haut. On peut donc conclure que cette machine peut utilement servir à remplacer les essais traditionnels.

## Revendications

1. Dispositif d'essai d'un élément d'optique (E) soumis à un rayonnement, comprenant un support de fixation (2) de l'élément d'optique, caractérisé en ce qu'il comprend encore une pointe (11) conductrice thermique, reliée à une source de chaleur (12) réglable (15) et mobile au-dessus du support (2) pour être posée sur l'élément d'optique (E).

2. Dispositif d'essai d'un élément d'optique suivant la revendication 1, caractérisé en ce que la pointe contient un thermomètre (16).

3. Dispositif d'essai d'un élément d'optique suivant l'une quelconque des revendications 1 ou 2, caractérisé en ce que la pointe a un bout arrondi (16b).

4. Dispositif d'essai d'un élément d'optique suivant l'une quelconque des revendications 1 ou 2, caractérisé en ce que la pointe a un bout plat (16a).

5. Dispositif d'essai d'un élément d'optique suivant l'une quelconque des revendications 1 à 4, caractérisé en ce que la pointe est mobile en rotation.

6. Dispositif d'essai d'un élément d'optique suivant l'une quelconque des revendications 1 à 5, caractérisé en ce que la pointe (11) a une surface en contact avec l'élément d'optique (E) qui est polie.
